# FASCICULE DE BREVET EUROPEEN

(11) **EP 3 102 407 B1**
(45) Date de publication et mention de la délivrance du brevet: **06.12.2017**
(21) Numéro de dépôt: 15704271.4
(22) Date de dépôt: 05.02.2015
(51) Int. Cl.: B32B 15/06, B32B 7/12, B32B 25/04, B60C 9/00, C08J 5/12, C09J 161/12

(54) **ELÉMENT DE RENFORT EN ACIER REVÊTU PAR UNE COMPOSITION ADHÉSIVE À BASE D'ALDÉHYDE AROMATIQUE ET DE POLYPHÉNOL**
STAHLBEWEHRUNGSELEMENT MIT EINER BESCHICHTUNG AUS EINER KLEBSTOFFZUSAMMENSETZUNG MIT AROMATISCHEM ALDEHYD UND POLYPHENOL
STEEL REINFORCING ELEMENT COATED WITH AN ADHESIVE COMPOSITION CONTAINING AROMATIC ALDEHYDE AND POLYPHENOL

(30) Priorité: 06.02.2014 FR 1450900
(43) Date de publication de la demande: 14.12.2016
(73) Titulaire: Compagnie Générale des Etablissements Michelin, 63000 Clermont-Ferrand (FR)
(72) Inventeur: MICHOUD, Clément, F-63040 Clermont-Ferrand Cedex 9 (FR); DOISNEAU, David, F-63040 Clermont-Ferrand Cedex 9 (FR)
(74) Mandataire: Desbordes, Guillaume
(86) Numéro de dépôt international: PCT/EP2015/052360
(87) Numéro de publication internationale: WO 2015/118041

(56) Documents cités:
- EP-A2- 2 006 341
- WO-A1-99/02583
- WO-A1-2012/112240
- WO-A1-2013/017422
- WO-A1-2013/017423
- US-A- 2 343 551
- DATABASE WPI Week 201353 Thomson Scientific, London, GB; AN 2012-R49625 XP002730971, & CN 102 718 934 A (BEIJING RED AVENUE INNOVA CO LTD) 10 octobre 2012 (2012-10-10)
- DATABASE WPI Week 198125 Thomson Scientific, London, GB; AN 1981-44855D XP002730973, & JP S56 47470 A (NAGOYA YUKAGAKU KOGYO KK) 30 avril 1981 (1981-04-30)
- DATABASE WPI Week 201356 Thomson Scientific, London, GB; AN 2013-G00913 XP002730974, & CN 102 875 754 A (BEIJING RED AVENUE INNOVA CO LTD) 16 janvier 2013 (2013-01-16)

## Description

Le domaine de la présente invention est celui des éléments de renfort métalliques et des compositions adhésives ou « colles » destinées à faire adhérer de tels éléments de renfort métalliques à des matrices de caoutchouc insaturé telles que celles utilisées couramment dans les articles ou produits semi-finis en caoutchouc.

La présente invention est plus particulièrement relative à des éléments de renfort en acier revêtus par des couches adhésives à base d'une résine phénol-aldéhyde, notamment à des éléments de renfort en acier revêtus susceptibles de renforcer des structures de pneumatiques.

On connait de l'état de la technique des éléments de renfort en acier pour pneumatique comprenant un ou plusieurs éléments de renfort filaires en acier, par exemple des fils en acier. Il est connu de faire adhérer ces fils en acier à des compositions de caoutchouc grâce à l'utilisation de colles connues sous la dénomination « RFL » (pour résorcinol-formaldéhyde-latex), comme par exemple dans EP2006341. Ces colles RFL comprennent de manière bien connue une résine phénolique thermodurcissable, obtenue par la condensation du résorcinol avec le formaldéhyde, et un ou plusieurs latex de caoutchouc diénique en solution aqueuse.

Les colles RFL de EP2006341 assurent une bonne adhésion du ou des fils en acier revêtus à des matrices de caoutchouc sans que ces derniers ne soient traités en surface, c'est-à-dire en l'absence d'une couche d'un revêtement métallique, par exemple une couche de laiton. Toutefois, la colle RFL nécessite l'utilisation d'un polymère halogéné et d'un oxyde métallique. En outre, cette colle RFL nécessite l'utilisation d'une matrice de caoutchouc comprenant une composition de caoutchouc acrylique et ne permet donc pas une adhésion satisfaisante avec n'importe quelle matrice de caoutchouc.

WO99/02583 divulgue un élément métallique revêtu d'une composition adhésive aqueuse comprenant entre autre une résine phénolique et une polyoléfine halogénée, pour permettre son adhésion à un substrat en caoutchouc. Ainsi, les concepteurs d'articles en caoutchouc, notamment les manufacturiers de pneumatiques, ont pour objectif aujourd'hui de trouver de nouveaux systèmes adhésifs simples permettant de faire adhérer de façon satisfaisante les éléments de renfort métalliques aux matrices de caoutchouc sans que celles-ci ne soient nécessairement à base d'une composition de caoutchouc acrylique ou que l'on doive utiliser la colle en association avec un polymère halogéné et un oxyde métallique.

Or, au cours de leurs recherches, les Demanderesses ont découvert une composition adhésive permettant de répondre à l'objectif ci-dessus.

Ainsi, un premier objet de l'invention concerne un élément de renfort en acier revêtu obtenu par revêtement d'au moins une partie de l'élément de renfort par une couche adhésive comprenant une composition adhésive comportant :
- au moins un latex d'élastomère insaturé, et
- au moins une résine phénol-aldéhyde à base d'au moins :
   - un aldéhyde aromatique porteur d'au moins une fonction aldéhyde, comprenant au moins un noyau aromatique;
   - un polyphénol comportant un ou plusieurs noyau(x) aromatique(s), étant entendu que :
      ∘ dans le cas d'un seul noyau aromatique, ce dernier est porteur de deux ou trois fonctions hydroxyles en position méta l'une par rapport à l'autre ou les unes par rapport aux autres, le reste du noyau aromatique étant non substitué ;
         dans le cas de plusieurs noyaux aromatiques, au moins deux d'entre eux sont chacun porteur de deux ou trois fonctions hydroxyles en position méta l'une par rapport à l'autre ou les unes par rapport aux autres, étant entendu que les deux positions en ortho d'au moins une de ces fonctions hydroxyles sont non substituées ;
et la teneur en eau de la composition adhésive aqueuse étant comprise entre 60 et 90% en masse.

L'invention concerne également un procédé de fabrication d'un élément de renfort en acier revêtu au moins en partie d'une couche adhésive. Le procédé selon l'invention comporte une étape de revêtement d'au moins une partie de l'élément de renfort en acier par la couche adhésive comprenant une composition adhésive aqueuse telle que décrite ci-dessus.

En outre, l'invention concerne l'utilisation, pour l'adhésion d'un élément de renfort en acier à une matrice de caoutchouc, d'une composition adhésive aqueuse telle que décrite ci-dessus formant une couche adhésive revêtant au moins en partie l'élément de renfort en acier.

L'invention a aussi pour objet un composite de caoutchouc renforcé d'au moins un élément de renfort en acier revêtu tel que décrit ci-dessus comprenant une matrice de caoutchouc dans laquelle est noyé l'élément de renfort en acier revêtu.

Un autre objet de l'invention est un pneumatique comprenant au moins un composite de caoutchouc tel que décrit ci-dessus.

L'invention concerne donc tout composite (article ou produit semi-fini) en caoutchouc, en particulier tout pneumatique, avant comme après cuisson (pour réticulation ou vulcanisation finale), comportant un élément de renfort en acier revêtu tel que décrit ci-dessus.

L'invention concerne également l'utilisation de l'élément de renfort en acier revêtu tel que décrit ci-dessus comme élément de renforcement d'articles ou produits semi-finis en caoutchouc, particulièrement de pneumatiques, notamment ceux destinés à équiper des véhicules à moteur de type tourisme, SUV (*"Sport Utility Vehicles"*), deux roues (notamment vélos, motos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

Dans la présente description, sauf indication expresse différente, tous les pourcentages (%) indiqués sont des % en masse.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### I - ELEMENT DE RENFORT EN ACIER REVETU

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, de l'élément de renfort, des composites ou articles finis, en particulier au cours d'une étape de cuisson.

L'élément de renfort en acier revêtu selon l'invention peut comprendre, dans un mode de réalisation, un unique élément de renfort filaire. Dans un autre mode de réalisation, l'élément de renfort en acier revêtu selon l'invention comprend plusieurs éléments de renfort filaires assemblés ensemble, par exemple par câblage ou retordage. Parmi les éléments de renfort en acier revêtus comprenant plusieurs éléments de renfort filaires, on citera par exemple les câbles à couches et les câbles multi-torons. Chaque élément de renfort filaire est unitaire, c'est-à-dire que les constituants de chaque élément de renfort filaire sont indissociables les uns des autres.
Par élément de renfort filaire, on entend les éléments longilignes de grande longueur relativement à leur section transversale, quelle que soit la forme de cette dernière, par exemple circulaire, oblongue, rectangulaire ou carrée, ou même plate, cet élément filaire pouvant être rectiligne comme non rectiligne, par exemple torsadé, ou ondulé. Lorsqu'il est de forme circulaire, le diamètre de chaque élément de renfort filaire est de préférence inférieur à 5 mm, plus préférentiellement compris dans un domaine allant de 0,1 à 0,5 mm. On citera également les feuillards ou les bandes qui présentent une grande longueur par rapport à leur épaisseur.

Dans un mode de réalisation préféré, l'élément de renfort revêtu comprend un ou plusieurs éléments de renfort filaires comprenant chacun une âme en acier. L'âme en acier est monolithique, c'est-à-dire qu'elle est par exemple venue de matière ou de moulage.

La couche adhésive revêt au moins une partie du ou de chaque élément de renfort filaire. Ainsi, la couche adhésive peut revêtir partiellement ou en totalité le ou chaque élément de renfort filaire. Ainsi, dans le mode de réalisation dans lequel l'élément de renfort en acier revêtu comprend un unique élément de renfort filaire, la couche adhésive peut revêtir certaines parties de cet élément ou bien sa totalité. Dans le mode de réalisation dans lequel l'élément de renfort en acier revêtu comprend plusieurs éléments de renfort filaires, la couche adhésive peut revêtir plusieurs éléments filaires sans en revêtir d'autres ou bien revêtir uniquement certaines parties de certains ou de tous les éléments filaires.

L'acier peut présenter une microstructure perlitique, ferritique, austénitique, bainitique, martensitique ou une microstructure issue d'un mélange de ces microstructures.

De préférence, l'acier comprend un taux de carbone allant de 0,2 % à 1 % en masse et plus préférentiellement de 0,3 % à 0,7 % en masse. De préférence, l'acier comprend un taux de manganèse allant de 0,3 % à 0,7 % en masse, un taux de silicium allant de 0,1 % à 0,3 % en masse, un taux de phosphore allant au plus jusqu'à 0,045 % borne incluse en masse, un taux de soufre allant au plus jusqu'à 0,045 % borne incluse en masse et un taux d'azote allant au plus jusqu'à 0,008 % borne incluse en masse. De façon optionnelle, l'acier comprend au plus 0,1 % borne incluse, de préférence 0,05 % borne incluse, et plus préférentiellement 0,02 % borne incluse en masse de vanadium et/ou de molybdène.

Dans un mode de réalisation, l'acier utilisé comprend moins de 0,5 %, de préférence au plus 0,05 % borne incluse, et plus préférentiellement au plus 0,02 % borne incluse en masse de chrome.

Dans un autre mode de réalisation utilisant de l'acier dit inoxydable, l'acier comprend au moins 0,5 % borne incluse, de préférence au moins 5 % borne incluse et plus préférentiellement au moins 15 % borne incluse en masse de chrome.

De préférence, l'acier comprend au moins 2% borne incluse, de préférence au moins 4% borne incluse et plus préférentiellement au moins 6% en masse de nickel.

Dans un autre mode de réalisation, la couche adhésive revêt directement une couche d'un revêtement métallique revêtant directement au moins une partie de l'âme en acier du ou de chaque élément de renfort filaire. Le métal de la couche du revêtement métallique est réalisé dans un métal différent de l'acier.

De préférence, le métal de la couche du revêtement métallique revêtant directement au moins une partie de l'âme en acier du ou de chaque élément de renfort filaire est choisi parmi le zinc, le cuivre et les alliages de ces métaux. Comme exemples d'alliages de ces métaux, on citera le laiton.

Dans un autre mode de réalisation, la couche adhésive revêt directement une couche intermédiaire d'adhésion non métallique revêtant au moins une partie de l'âme en acier du ou de chaque élément de renfort filaire. Dans une variante de ce mode de réalisation, la couche intermédiaire d'adhésion non métallique revêt directement au moins une partie de la couche du revêtement métallique revêtant directement au moins une partie de l'âme en acier du ou de chaque élément de renfort filaire. La couche intermédiaire non métallique, généralement appelée primaire d'adhésion, permet, en combinaison avec la couche adhésive comprenant la composition adhésive, d'améliorer l'adhésion de l'élément de renfort en acier revêtu à la matrice de caoutchouc. De tels primaires d'adhésion sont ceux couramment utilisés par l'homme du métier pour le pré-encollage de certaines fibres textiles (fibres en polyester, par exemple PET, en aramide, en aramide/nylon). Par exemple, on pourra utiliser un primaire à base d'époxy, notamment à base de polyglycérol polyglycidyl éther. On pourra également utiliser un primaire à base d'isocyanate bloqué.

Par couche revêtant « directement » un objet ou revêtement revêtant « directement » un objet, on entend que la couche ou le revêtement est au contact de l'objet sans qu'aucun autre objet, notamment une autre couche ou un autre revêtement ne soit interposé entre les deux.

La composition adhésive comprend donc au moins une (c'est-à-dire une ou plusieurs) résine phénol-aldéhyde à base d'au moins un (c'est-à-dire un ou plusieurs) aldéhyde aromatique et au moins un (c'est-à-dire un ou plusieurs) polyphénol, et au moins un (c'est-à-dire un ou plusieurs) latex d'élastomère insaturé, constituants qui vont être décrits en détail ci-après.

### I.1 - Aldéhyde aromatique

Le premier constituant de la résine phénol-aldéhyde est un aldéhyde aromatique porteur d'au moins une fonction aldéhyde, comprenant au moins un noyau aromatique.

Selon un mode de réalisation préférentiel, le noyau aromatique est porteur de la fonction aldéhyde.

De préférence, l'aldéhyde aromatique est porteur d'au moins deux fonctions aldéhydes. Préférentiellement, le noyau aromatique de l'aldéhyde aromatique est porteur de deux fonctions aldéhydes, ces dernières pouvant être en position ortho, méta ou para sur le noyau aromatique.

Préférentiellement le noyau aromatique de l'aldéhyde aromatique est un noyau benzénique. Dans certains modes de réalisation, cet aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde, et les mélanges de ces composés.

Encore plus préférentiellement le polyaldéhyde aromatique utilisé est le 1,4-benzène-dicarboxaldéhyde, encore appelé téréphtaldéhyde, pour rappel de formule chimique développée :

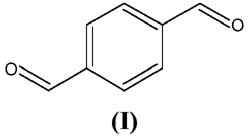

Dans d'autres modes de réalisation, l'aldéhyde aromatique présente la formule **(A)**: 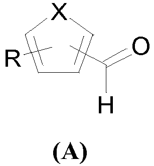 dans laquelle X comprend N, S ou O et R représente -H ou -CHO.

De tels aldéhydes aromatiques sont issus de ressources renouvelables et pas du pétrole. Les aldéhydes aromatiques sont par exemple issus de la bio-ressource ou de produits de transformation de la bio-ressource.

Préférentiellement, l'aldéhyde aromatique est de formule générale **(A')**:

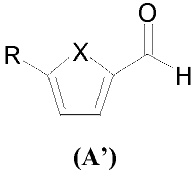

Selon un mode de réalisation préférentiel, X représente O.

Dans une variante de l'aldéhyde aromatique de formule générale **(A)**, X représente O et R représente -H. L'aldéhyde aromatique utilisé est alors de formule **(B1)**:

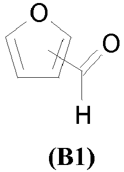

Dans une variante de l'aldéhyde aromatique de formule générale **(A')**, X représente O et R représente -H. L'aldéhyde aromatique utilisé est alors le furfuraldéhyde et est de formule **(B'1)**:

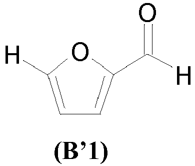

Dans une autre variante de l'aldéhyde aromatique de formule générale **(A)**, X représente O et R représente -CHO. L'aldéhyde aromatique utilisé est alors de formule **(B2)**:

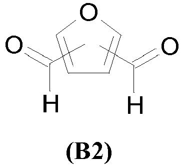

Dans une autre variante de l'aldéhyde aromatique de formule générale **(A')**, X représente O et R représente -CHO. L'aldéhyde aromatique utilisé est alors le 2,5-furanedicarboxaldéhyde et est de formule **(B'2):**

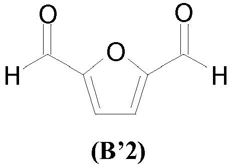

Dans un autre mode de réalisation, X comprend N.

Dans une variante de l'aldéhyde aromatique de formule générale **(A)**, X représente NH. L'aldéhyde aromatique utilisé est de formule **(C1)**:

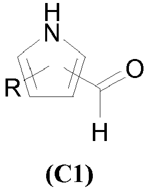

Dans une variante de l'aldéhyde aromatique de formule générale **(A')**, X représente NH. L'aldéhyde aromatique utilisé est de formule **(C'1)**:

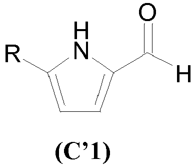

De préférence, R représente -CHO dans la variante de l'aldéhyde aromatique de formule **(C'1)** et l'aldéhyde aromatique obtenu est alors le 2,5-1H-pyrroledicarboxaldéhyde.

Dans une autre variante de l'aldéhyde aromatique de formule générale **(A)**, X représente NR1 avec R1 représentant un groupe alkyle, aryle arylalkyle, alkylaryle ou cycloalkyle. L'aldéhyde aromatique utilisé est de formule **(C2):**

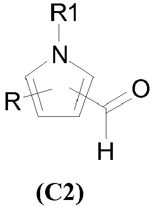

Dans un autre mode de réalisation, X comprend S.

Dans une variante de l'aldéhyde aromatique de formule générale **(A)**, X représente S. L'aldéhyde aromatique utilisé est de formule **(D1)**:

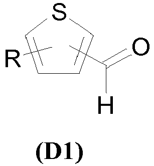

Dans une variante de l'aldéhyde aromatique de formule générale **(A')**, X représente S. L'aldéhyde aromatique utilisé est de formule **(D'1)**:

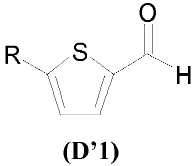

De préférence, R représente -CHO dans la variante de l'aldéhyde aromatique de formule **(D'1)** et est alors le 2,5-thiophènedicarboxaldéhyde.

Dans une autre variante de l'aldéhyde aromatique de formule générale **(A)**, X représente SR2 avec R2 représentant un groupe alkyle, aryle arylalkyle, alkylaryle ou cycloalkyle. L'aldéhyde aromatique utilisé est de formule **(D2):**

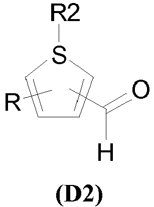

Dans encore une autre variante de l'aldéhyde aromatique de formule générale **(A)**, X représente R3-S-R2 avec R2, R3 représentant chacun indépendamment l'un de l'autre un groupe alkyle, aryle arylalkyle, alkylaryle ou cycloalkyle. L'aldéhyde aromatique utilisé est de formule **(D3):**

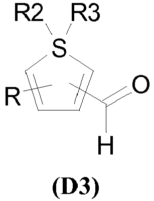

Dans encore une autre variante de l'aldéhyde aromatique de formule générale **(A)**, X représente S=O. L'aldéhyde aromatique utilisé est de formule **(D4):**

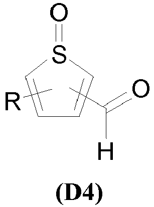

Dans encore une autre variante de l'aldéhyde aromatique de formule générale **(A)**, X représente O=S=O. L'aldéhyde aromatique utilisé est de formule **(D5):**

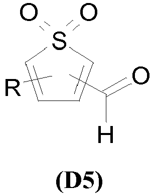

Parmi les différents modes de réalisation décrits ci-dessus, on préfèrera les modes de réalisation et les variantes dans lesquels X représente NH, S ou O. Dans ces modes de réalisation et variantes, on pourra avoir R représentant -H ou -CHO et de préférence R représentant -CHO. Dans ces modes de réalisation et variantes, on aura préférentiellement R en position 5 et le groupe -CHO en position 2 sur le noyau aromatique (formule générale **(A'))**.

La résine phénol-aldéhyde pourra comprendre un mélange des composés indiqués ci-dessus, en particulier un mélange de furfuraldéhyde et de 2,5-furanedicarboxaldéhyde.

De préférence, lorsque la résine phénol-aldéhyde est à base d'un unique aldéhyde aromatique, la composition est dépourvue de formaldéhyde.

Lorsque la résine phénol-aldéhyde est à base de plusieurs aldéhydes, dont au moins l'un est un aldéhyde aromatique, chaque aldéhyde est préférentiellement différent du formaldéhyde. La composition est alors également préférentiellement dépourvue de formaldéhyde.

En d'autres termes et de manière préférée, le ou chaque aldéhyde de la résine phénol-aldéhyde est différent du formaldéhyde.

Par dépourvue de formaldéhyde, on entend que le taux massique de formaldéhyde en poids total du ou des aldéhydes est strictement inférieur à 1%.

Dans certains modes de réalisation, la composition peut comprendre du formaldéhyde. De préférence, la composition comprend alors un taux massique de formaldéhyde en poids total du ou des aldéhydes est inférieur ou égal à 10%, de préférence à 5% et plus préférentiellement à 2%.

### I.2 - Polyphénol

Le deuxième constituant de la résine phénol-aldéhyde est un polyphénol comportant un ou plusieurs noyau(x) aromatique(s).

Dans le cas d'un polyphénol comportant un seul noyau aromatique, ce dernier est porteur de deux ou trois fonctions hydroxyles en position méta l'une par rapport à l'autre (dans le cas de deux fonctions) ou les unes par rapport aux autres (dans le cas de trois fonctions), le reste du noyau aromatique étant par définition non substitué ; on entend par là que les autres atomes de carbone du reste du noyau aromatique (ceux autres que les atomes de carbone porteurs des fonctions hydroxyles) sont porteurs d'un simple atome d'hydrogène.

A titre d'exemple préférentiel de polyphénol comportant un seul noyau aromatique, on peut citer en particulier le résorcinol, pour rappel de formule développée :

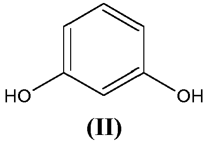

A titre d'exemple encore plus préférentiel comportant un seul noyau aromatique, on peut citer le phloroglucinol, pour rappel de formule développée :

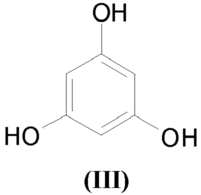

Dans le cas d'un polyphénol comportant plusieurs (deux ou plus de deux) noyaux aromatiques, au moins deux d'entre eux sont chacun porteur de deux ou trois fonctions hydroxyles en position méta l'une par rapport à l'autre (dans le cas de deux fonctions), ou les unes par rapport aux autres (dans le cas de trois fonctions), étant entendu que les deux positions en ortho d'au moins une de ces fonctions hydroxyles sont non substituées ; on entend par là que les deux atomes de carbone situés de part et d'autre (en position ortho) de l'atome de carbone hydroxylé (i.e., porteur de la fonction hydroxyle) sont porteurs d'un simple atome d'hydrogène.

A titres d'exemples préférentiels, dans le cas où la molécule de polyphénol comporte plusieurs noyaux aromatiques, au moins deux de ces noyaux aromatiques, identiques ou différents, sont choisis parmi ceux de formules générales : 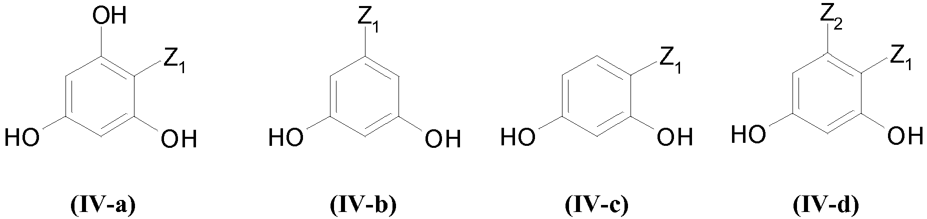 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste de la molécule polyphénol.

Selon un mode de réalisation particulier et préférentiel de l'invention, le polyphénol est par exemple un flavonoïde, caractérisé pour rappel par une structure de base à 15 atomes de carbone, formée par deux cycles benzéniques reliés par trois atomes de carbone. Plus particulièrement, le flavonoïde utilisé est le 2',4',3, 5, 7-pentahydroxyflavone, appelé aussi « Morin », de formule **(V)** ci-après :

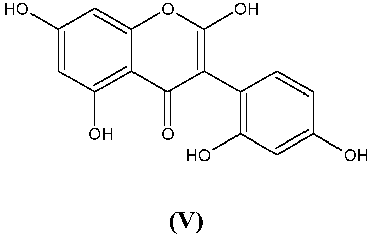

On note que ce composé est un polyphénol comportant deux noyaux aromatiques (de formules respectives **IV-c** et **IV-d** ci-dessus) dont chacun est bien porteur de deux fonctions hydroxyles en position méta l'une par rapport à l'autre, les deux positions en ortho d'au moins une de ces deux fonctions hydroxyles étant non substituées.

Selon un autre mode de réalisation particulier et préférentiel de l'invention, le polyphénol est par exemple le phloroglucide, encore appelé 2,4,6,3',5'-biphénylpentol, de formule développée suivante :

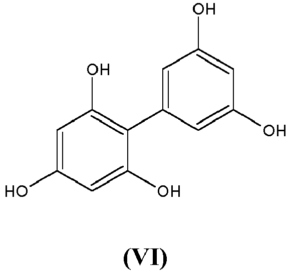

On note que ce composé est un polyphénol comportant deux noyaux aromatiques (de formules respectives **IV-a** et **IV-b** ci-dessus) dont chacun est bien porteur d'au moins deux (en l'occurrence, un porteur de deux, l'autre porteur de trois) fonctions hydroxyles en position méta l'une par rapport à l'autre, les deux positions en ortho d'au moins une de ces deux fonctions hydroxyles étant non substituées.

Selon encore un autre mode de réalisation particulier et préférentiel de l'invention, le polyphénol est par exemple le 2,2',4,4'-tétrahydroxydiphényl sulfide de formule développée suivante :

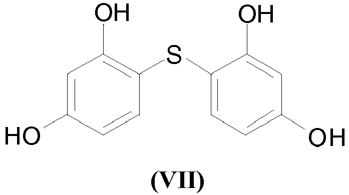

Dans un mode de réalisation préférentiel, le polyphénol est choisi dans le groupe constitué par le phloroglucinol **(III),** le 2,2',4,4'-tétrahydroxydiphényl sulfide **(VII)** et les mélanges de ces composés.

### I.3 - Latex d'élastomère insaturé

On rappelle qu'un latex est une dispersion stable de microparticules d'élastomère(s) en suspension dans une solution aqueuse.

Les latex d'élastomère insaturé (c'est-à-dire porteur de doubles liaisons carbone-carbone), notamment d'élastomère diénique, sont bien connus de l'homme du métier.

Conformément à l'invention, la composition adhésive comporte au moins un (c'est-à-dire un ou plusieurs) latex d'élastomère insaturé. L'élastomère insaturé du latex est préférentiellement un élastomère diénique, plus préférentiellement un élastomère diénique choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

Un tel latex d'élastomère insaturé est dispersé dans la résine et forme des points d'ancrage du souffre assurant ainsi une bonne liaison entre la couche adhésive et la matrice de caoutchouc dans laquelle l'élément de renfort est destiné à être noyé. Un tel latex présente également l'avantage d'être relativement souple et flexible ce qui permet d'accompagner les déformations de l'élément de renfort sans que la couche adhésive ne rompe. Enfin, un tel latex présente l'avantage de présenter du collant à cru avec la matrice de caoutchouc dans laquelle l'élément de renfort est destiné à être noyé. Ainsi, lors de la fabrication du composite, l'élément de renfort revêtu de la composition adhésive adhère à la matrice qui ne glisse pas autour de l'élément de renfort revêtu.

### I.4 - Additifs - Fabrication de la composition adhésive

La composition adhésive et/ou sa résine phénol-aldéhyde et/ou son latex d'élastomère insaturé de départ, peuvent bien entendu comporter tout ou partie des additifs habituels pour compositions adhésives telles que ceux utilisés dans les colles RFL conventionnelles ; on citera par exemple des bases telles que ammoniaque, hydroxyde de sodium, de potassium ou d'ammonium, des colorants, charges telles que noir de carbone ou silice, antioxydants ou autre stabilisants.

Typiquement, lors d'une première étape de fabrication, on prépare la résine elle-même en mélangeant progressivement le polyphénol et l'aldéhyde aromatique dans un solvant basique tel qu'une solution aqueuse de soude, ayant de préférence un pH compris entre 9 et 13, plus préférentiellement entre 10 et 12. L'ensemble des constituants est mélangé sous agitation pendant un temps variable selon la température utilisée et la composition spécifique visée, par exemple pendant une durée pouvant varier entre 1 min et 6 h, à une température comprise entre 15°C et 90°C, préférentiellement entre 20°C et 60°C.

La résine phénol-aldéhyde ainsi précondensée est généralement diluée dans l'eau de façon à obtenir une composition adhésive aqueuse. Puis, on ajoute un latex ou des latex (s'ils sont plusieurs) d'élastomère(s) insaturé(s) pour constituer la composition adhésive aqueuse, selon un mode opératoire général qui est bien connu de l'homme du métier dans le domaine des colles RFL.

Par exemple, les constituants de la composition adhésive sont ajoutés dans l'ordre suivant : l'eau, d'éventuels additifs solubles dans l'eau (par exemple ammoniaque), le ou les latex (peu importe l'ordre), la résine phénol-aldéhyde (diluée). L'ensemble est mélangé sous agitation pendant 1 à 30 min, par exemple à 23°C.

Lors d'une dernière étape de fabrication, la composition adhésive est généralement stockée à température ambiante (23°C) pendant un temps de maturation pouvant varier typiquement de 1 à plusieurs heures voire plusieurs jours, avant son utilisation finale.

Dans la composition adhésive finale ainsi préparée, le taux d'extrait sec de résine phénol-aldéhyde représente de préférence entre 5 et 60 %, plus préférentiellement entre 10 et 30 % en poids de l'extrait sec de composition adhésive.

Le taux d'élastomère insaturé (c'est-à-dire l'extrait sec du ou des latex) est quant à lui compris de préférence entre 40 et 95 %, plus préférentiellement entre 70 et 90 %, en poids de l'extrait sec de la composition adhésive.

Le rapport pondéral de polyphénol sur aldéhyde aromatique est préférentiellement compris entre 0,1 et 3, plus préférentiellement entre 0,25 et 2.

Le rapport pondéral de l'extrait sec de résine sur l'extrait sec de latex est de préférence compris entre 0,1 et 2,0, plus préférentiellement entre 0,15 et 1,0.

La teneur en eau de la composition adhésive est conformément à l'invention comprise entre 60 et 90 %, plus préférentiellement entre 60 et 85 %.

Avantageusement, la composition adhésive comprend une gélatine. La gélatine permet de ralentir le démouillage des éléments de renfort filaires et donc d'assurer une meilleure adhésion entre l'élément de renfort en acier et la matrice de caoutchouc. Par gélatine, on entend tout mélange de protéines comprenant des produits de l'hydrolyse totale ou partielle de collagène.

### II - PROCEDE DE FABRICATION DE L'ELEMENT DE RENFORT REVETU

Au cours du procédé décrit précédemment, on revêt au moins une partie de l'élément de renfort en acier par la couche adhésive comprenant la composition adhésive décrite ci-dessus.

Cette étape de revêtement peut être effectuée selon toute méthode appropriée, notamment par toute technique d'enduction connue telle que par exemple pulvérisation, imprégnation par trempage, défilement dans un bain ou autre technique équivalente de dépôt de film de composition mince ou ultra-mince, ou encore par une combinaison d'une ou plusieurs de ces techniques.

Le poids d'extrait sec de la composition adhésive déposée sur un kilogramme d'élément de renfort filaire en acier non revêtu est de préférence compris entre 2 et 100 g, plus préférentiellement entre 2 et 50 g, encore plus préférentiellement entre 3 et 15 g.

Après l'étape précédemment décrite de revêtement de l'élément de renfort en acier par la composition adhésive, l'élément de renfort en acier revêtu subit un premier traitement thermique visant à éliminer tout solvant ou eau, à une température comprise de préférence entre 110°C et 260°C, plus préférentiellement entre 130°C et 250°C, par exemple par traversée d'un four-tunnel, typiquement de plusieurs mètres de long, tels que ceux utilisés couramment pour le traitement thermique après encollage des matériaux textiles par une colle RFL.

Puis, l'élément de renfort en acier revêtu anhydre ainsi obtenu subit un second traitement thermique pour terminer la réticulation de la composition adhésive, préférentiellement conduit à l'air dans un four tunnel tel que décrit ci-dessus. La température de traitement est de préférence comprise entre 150°C et 350°C. Les durées de traitement sont de quelques secondes à quelques minutes selon les cas (par exemple entre 10 s et 10 min).

L'homme du métier saura ajuster, le cas échéant, la température et la durée du traitement thermique ci-dessus, en fonction des conditions particulières de mise en oeuvre de l'invention, notamment de la nature exacte de la composition adhésive ou de la nature de l'acier. En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

L'épaisseur de la couche constituée de la composition adhésive revêtant chaque élément de renfort filaire est comprise dans un intervalle de valeurs allant de 5 à 100 µm, de préférence de 5 à 50 µm et plus préférentiellement de 10 à 35 µm.

Préalablement à l'étape de revêtement de l'élément de renfort en acier par la couche adhésive comprenant la composition adhésive, chaque élément de renfort filaire pourra subir des étapes de traitement, par exemple de décalaminage, de tréfilage en milieu humide ou en milieu sec ou encore de traitement thermique. Des exemples de ces étapes de traitement sont notamment décrits dans les documents US20100170624, US5535612 ou encore JP2000219938.

### III - COMPOSITE

Comme indiqué précédemment, la présente invention concerne également l'utilisation, pour l'adhésion de l'élément de renfort en acier à une matrice de caoutchouc, de la composition adhésive précédemment décrite, pour formation d'un composite de caoutchouc renforcé d'un tel élément qui constitue un autre objet de l'invention.

Ce composite de caoutchouc peut être préparé selon un procédé comportant au moins les étapes suivantes :
- au cours d'une première étape, combiner au moins une portion de l'élément de renfort en acier revêtu selon l'invention avec une matrice de caoutchouc (ou élastomère, les deux termes sont synonymes) pour former un composite de caoutchouc renforcé de l'élément de renfort en acier revêtu ;
- puis, au cours d'une deuxième étape, réticuler par cuisson, de préférence sous pression, le composite ainsi formé.

L'invention s'applique donc à tout type de composite de caoutchouc susceptible d'être obtenu par le procédé précédemment décrit, comportant au moins une matrice de caoutchouc, notamment d'élastomère diénique, liée à l'élément de renfort en acier via une interphase adhésive à base de la composition adhésive décrite ci-dessus.

L'élastomère diénique du composite est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères. Un mode de réalisation préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4.

### IV - PNEUMATIQUE

L'élément de renfort en acier revêtu et le composite décrits ci-dessus sont avantageusement utilisables pour le renforcement de pneumatiques de tous types de véhicules, en particulier véhicules tourisme ou véhicules industriels tels que Poids-lourd.

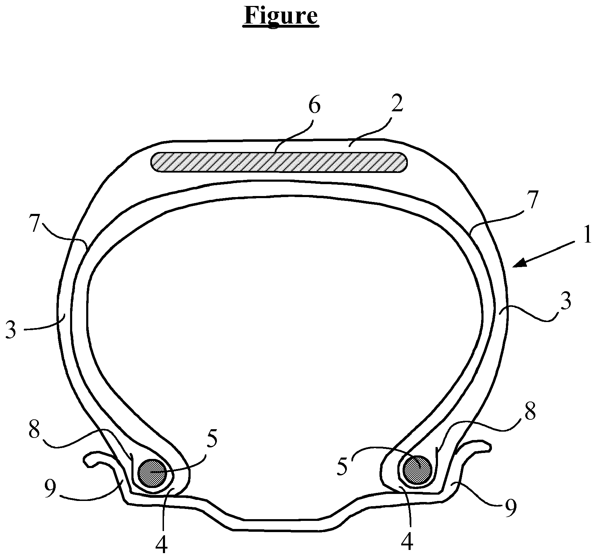

A titre d'exemple, la figure unique annexée représente de manière très schématique (sans respect d'une échelle spécifique), une coupe radiale d'un pneumatique conforme à l'invention pour véhicule du type poids lourd.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique qu'au moins une armature de sommet 6 et/ou son armature de carcasse 7 comporte un élément de renfort en acier revêtu ou un composite selon l'invention. Selon un autre exemple de mode de réalisation possible de l'invention, ce sont par exemple les tringles 5 qui pourraient être constituées, en tout ou partie, d'un élément de renfort en acier revêtu selon l'invention.

Bien entendu, l'invention concerne les objets précédemment décrits, à savoir l'élément de renfort en acier revêtu et le composite en caoutchouc tel que pneumatique le comportant, tant à l'état cru (avant cuisson ou vulcanisation) qu'à l'état cuit (après cuisson).

### V - EXEMPLES DE REALISATION DE L'INVENTION ET ESSAIS COMPARATIFS

Ces essais démontrent que :
- l'adhésion à une matrice de caoutchouc, d'éléments de renfort en acier revêtus par une composition adhésive selon l'invention, est largement améliorée par rapport à ces mêmes éléments de renfort en acier revêtu d'une colle RFL classique ; et
- la composition adhésive permet l'adhésion des éléments de renfort en acier à n'importe quelle matrice de caoutchouc, notamment des matrices de caoutchouc non acrylique, sans utilisation de polymère halogéné ou d'oxyde métallique (contrairement à EP2006341).

Pour cela, plusieurs compositions adhésives, notées ci-après C-1.1 à C-1.7, ont été préparées comme indiqué précédemment. Leurs formulations (exprimées en pourcentage en poids) sont présentées dans le tableau 1 annexé. Les quantités répertoriées dans ce tableau sont celles des constituants à l'état sec, ramenées à un total de 100 parties en poids de composition adhésive (c'est-à-dire les constituants plus l'eau).

Chaque composition adhésive C-1.1 à C-1.7 est à base d'un aldéhyde aromatique dont le noyau est porteur de deux fonctions aldéhydes.

Les aldéhydes des compositions C-1.1 à C-1.6 sont choisis dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés. En l'espèce, l'aldéhyde est choisi dans le groupe constitué par le 1,2-benzène-dicarboxaldéhyde, le 1,3-benzène-dicarboxaldéhyde et le 1,4-benzène-dicarboxaldéhyde.

L'aldéhyde de la composition C-1.7 est choisi dans le groupe constitué par le furfuraldéhyde, le 2,5-furanedicarboxaldéhyde et les mélanges de ces composés. En l'espèce, l'aldéhyde est le 2,5-furanedicarboxaldéhyde.

Les polyphénols des compositions C-1.1 à C-1.7 comporte un ou plusieurs noyau(x) aromatique(s), étant entendu que :
o dans le cas d'un seul noyau aromatique (cas du phloroglucinol et du résorcinol), ce dernier est porteur de deux ou trois fonctions hydroxyles en position méta l'une par rapport à l'autre ou les unes par rapport aux autres, le reste du noyau aromatique étant non substitué ;
o dans le cas de plusieurs noyaux aromatiques (cas du 2,2',4,4'-tétrahydroxydiphényl sulfide, du phloroglucide et du Morin), au moins deux d'entre eux sont chacun porteur de deux ou trois fonctions hydroxyles en position méta l'une par rapport à l'autre ou les unes par rapport aux autres, étant entendu que les deux positions en ortho d'au moins une de ces fonctions hydroxyles sont non substituées.

Ces compositions adhésives C-1.1 à C-1.7 comprennent au moins un latex d'élastomère insaturé, ici un mélange de plusieurs latex d'élastomère : un latex de caoutchouc naturel (NR), un latex de copolymère styrène-butadiène (SBR) et un latex de vynilpyridine-styrène-butadiène (VP-SBR).

En outre, chaque composition C-1.1 à C-1.7 comprend une gélatine.

On a comparé ces compositions adhésives avec une composition C-1.0 connue de l'état de la technique et comprenant du formaldéhyde et du résorcinol (sous la forme d'une résine précondensée SFR 1524).

La qualité de la liaison entre la matrice de caoutchouc et l'élément de renfort en acier est déterminée par un test dans lequel on mesure la force nécessaire pour extraire un élément de renfort en acier constitué d'un unique élément de renfort filaire de diamètre égal à 1,75 mm de la matrice de caoutchouc vulcanisée.

On a comparé des éléments de renfort en acier dont l'acier de l'âme de l'élément de renfort filaire est directement revêtu d'une couche d'un revêtement métallique. L'acier utilisé est un acier standard comprenant moins de 0,5 % en masse de chrome et moins de 2% en masse de nickel. Le métal de la couche de revêtement métallique est choisi parmi le zinc, le cuivre et les alliages de ces métaux. Ici les métaux des revêtements métalliques testés sont le zinc et le laiton. Le laiton utilisé comprend entre 50% et 75% en masse de cuivre et entre 25% et 50% en masse de zinc. En l'espèce, le laiton utilisé comprend 63% en masse de cuivre et 37% en masse de zinc.

Ici, chaque élément de renfort filaire testé est dépourvu de couche intermédiaire d'adhésion non métallique.

La composition de caoutchouc de la matrice de caoutchouc est une composition conventionnelle utilisable pour le calandrage de nappes métalliques de pneumatiques, à base de caoutchouc naturel, de noir de carbone et des additifs usuels. En l'espèce, la composition de caoutchouc comprend 100 pce de caoutchouc naturel, 70 pce de noir de carbone série 300, 1,5 pce de N-1, 3-diméthylbutyl-N-phényl-para-phénylènediamine, 1 pce d'un sel de cobalt, 0,9 pce d'acide stéarique, 6 pce de soufre insoluble moléculaire, 0,8 pce de N-tertiarybutyl-2-benzothiazole sulfamide et 7,5 pce de ZnO.

On a revêtu l'élément de renfort filaire par chaque composition adhésive testée. Plus précisément, on a revêtu directement la couche de revêtement métallique par chaque composition adhésive testée puis on a séché les éléments de renfort en acier ainsi revêtus dans un four de séchage à 180 °C pendant 30 s. Puis la composition adhésive a été réticulée par passage des éléments de renfort en acier revêtus dans un four de traitement à 240 °C pendant 30 s. Puis l'ensemble a été solidarisé par cuisson à une matrice de caoutchouc, grâce à un traitement thermique de vulcanisation, pour former des éprouvettes de composites comme décrit ci-dessous.

Plus précisément, la matrice de caoutchouc vulcanisée est un bloc de caoutchouc constitué de deux plaques de dimensions 200 mm par 12,5 mm et d'épaisseur 7 mm, appliquées l'une sur l'autre avant cuisson (l'épaisseur du bloc résultant est alors de 14 mm). C'est lors de la confection de ce bloc que les éléments de renfort en acier revêtus (15 tronçons au total) sont emprisonnés entre les deux plaques de caoutchouc à l'état cru, à égale distance et en laissant dépasser de part et d'autre de ces plaques une extrémité de l'élément de renfort en acier revêtu de longueur suffisante pour la traction ultérieure. Le bloc comportant les éléments de renfort en acier revêtus est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 20 min.

A l'issue de la cuisson, l'éprouvette ainsi constituée du bloc vulcanisé et des 15 tronçons d'éléments de renfort en acier revêtus est mise en place dans les mâchoires d'une machine de traction adaptée pour permettre de tester chaque tronçon isolément, à une vitesse et une température données (par exemple, dans le cas présent, à 100 mm/min et 23°C).

On caractérise les niveaux d'adhésion en mesurant la force dite d'arrachage (notée Fₘₐₓ) pour arracher les éléments de renfort en acier revêtus de l'éprouvette. Une valeur supérieure à celle de l'éprouvette témoin (correspondant à l'utilisation de la colle RFL classique C-1.0), arbitrairement fixée à 100, indique un résultat amélioré, c'est-à-dire une force d'arrachage supérieure à celle de l'éprouvette témoin. Les résultats des tests effectués sur les éprouvettes sont résumés dans le tableau 1. Lorsqu'on n'a pas effectué de test, on a indiqué la mention « NT » pour non testé.

On constate que les éléments de renfort en acier revêtus avec les compositions adhésives C-1.1 à C-1.7 présentent une force d'arrachage Fₘₐₓ particulièrement élevée et inattendue pour l'homme du métier, puisque très largement augmentée par rapport à une colle RFL classique de la composition C-1-0, et ce sans pour autant utiliser une matrice de caoutchouc spécifique, de polymère halogéné et d'oxyde métallique.

Parmi les autres avantages liés à l'invention, on notera que la composition adhésive peut être dépourvue de formaldéhyde dont il est souhaitable de diminuer l'utilisation, voire de la supprimer à terme dans les compositions adhésives, en raison de l'évolution récente de la réglementation européenne sur ce type de composé. En outre, le formaldéhyde est un composé dérivé du pétrole dont on souhaite le plus possible s'affranchir pour des raisons de raréfaction.

L'invention ne se limite pas aux modes de réalisation décrits précédemment.

On pourra également envisager de revêtir plusieurs éléments de renfort filaires comprenant chacun une âme en acier. Dans un mode de réalisation, on assemble les éléments de renfort filaires ensemble puis on revêt collectivement les éléments de renfort filaires par la composition adhésive. Dans un autre mode de réalisation, on revêt individuellement chaque élément de renfort filaire par la composition adhésive puis on assemble les éléments de renfort filaires ensemble.

On pourra également envisager l'utilisation d'éléments de renfort en acier revêtus comprenant une couche intermédiaire d'adhésion non métallique revêtant directement l'âme en acier des éléments de renfort filaires ou la couche de revêtement métallique, la couche de la composition adhésive revêtant alors directement cette couche intermédiaire d'adhésion non métallique ou la couche de revêtement métallique.

**Tableau 1**

| **Compositions adhésives** | **C-1.0** | **C-1.1** | **C-1.2** | **C-1.3** | **C-1.4** | **C-1.5** | **C-1.6** | **C-1.7** |
|---|---|---|---|---|---|---|---|---|
| **Aldéhyde** | | | | | | | | |
| 1,2-benzènedicarboxaldéhyde (1) | - | - | 0.9 | - | - | - | - | - |
| 1,3-benzènedicarboxaldéhyde (2) | - | - | - | - | 0.9 | - | - | - |
| 1,4-benzènedicarboxaldéhyde (3) | - | 0.9 | - | 0.9 | - | 0.9 | 0.9 | - |
| 2,5-furanedicarboxaldéhyde (4) | - | - | - | - | - | - | - | 0.9 |
| Formaldéhyde (5) | 0,71 | - | - | - | - | - | - | - |

| **Polyphénol** | | | | | | | | |
|---|---|---|---|---|---|---|---|---|
| Phloroglucinol (6) | - | 1.7 | - | - | - | - | - | - |
| 2,2',4,4'-tétrahydroxydiphényl sulfide (7) | - | - | 1.7 | 1.7 | - | - | - | - |
| Phloroglucide (8) | - | - | - | - | 1.7 | 1.7 | - | - |
| Morin (9) | - | - | - | - | - | - | 1.7 | |
| Résorcinol (10) | - | - | - | - | - | - | - | 1.7 |
| SRF 1524 (11) | 2,05 | - | - | - | - | - | - | - |

| **Latex d'élastomères** | | | | | | | | |
|---|---|---|---|---|---|---|---|---|
| NR (12) | 6.4 | 6.4 | 6.4 | 6.4 | 6.4 | 6.4 | 6.4 | 6.4 |
| SBR (13) | 3.2 | 3.2 | 3.2 | 3.2 | 3.2 | 3.2 | 3.2 | 3.2 |
| VP-SBR (14) | 6.4 | 6.4 | 6.4 | 6.4 | 6.4 | 6.4 | 6.4 | 6.4 |

| **Additifs** | | | | | | | | |
|---|---|---|---|---|---|---|---|---|
| Hydroxyde de sodium (15) | 0.2 | 0.2 | 0.2 | 0.2 | 0.2 | 0.2 | 0.2 | 0.2 |
| Gélatine (16) | 1 | 1 | 1 | 1 | 1 | 1 | 1 | 1 |
| Ammoniaque (17) | 0.5 | 0.5 | 0.5 | 0.5 | 0.5 | 0.5 | 0.5 | 0.5 |
| | | | | | | | | |
| Poids total d'extrait sec de composition adhésive | 19,5 | 20.3 | 20.3 | 20.3 | 20.3 | 20.3 | 20.3 | 20.3 |
| Poids d'eau | 80,5 | 79.7 | 79.7 | 79.7 | 79.7 | 79.7 | 79.7 | 79.7 |

| **Tests d'adhésion** | | | | | | | | |
|---|---|---|---|---|---|---|---|---|
| Fₘₐₓ à 23°C (Acier zingué) | 100 | 655 | 292 | 473 | 497 | 396 | 592 | 468 |
| Fₘₐₓ à 23°C (Acier laitonné) | 100 | 120 | 126 | 117 | 119 | NT | 124 | 117 |

| | | | | | | | | |
|---|---|---|---|---|---|---|---|---|
| (1) 1,2-benzènedicarboxaldéhyde (de la société ABCR ; de pureté 98%) ; (2) 1,3-benzènedicarboxaldéhyde (de la société ABCR ; de pureté 98%) ; (3) 1,4-benzènedicarboxaldéhyde (de la société ABCR ; de pureté 98%) ; (4) 2,5-Furanedicarboxaldéhyde (de la société Aldrich ; de pureté 97%) ; (5) Formaldéhyde (de la société Caldic ; dilué à 36%) ; (6) Phloroglucinol (de la société Alfa Aesar ; de pureté 99%) ; (7) 2,2',4,4'-tétrahydroxydiphényl sulfide (de la société Alfa Aesar ; de pureté 98%) ; (8) Phloroglucide (de la société Alfa Aesar ; de pureté 95%) ; (9) Morin (de la société Fluka) ; (10) Résorcinol (de la société Sumitomo ; de pureté 99.5%) ; (11) Résine précondensée SRF 1524 (de la société Schenectady ; dilué à 75%) ; (12) Latex NR (« Trang Latex » de la société Bee tex ; dilué à 61% en poids) ; (13) Latex SBR (« Encord-201 » de la société Jubilant ; dilué à 41% en poids) (14) Latex Vinylpyridine-styrène-butadiène («VP 106S» de la société Eliokem ; dilué à 41%) ; (15) Hydroxyde de sodium (de la société Aldrich ; dilué à 30%) ; (16) Gélatine (Gélatine de peau de bovin de la société Aldrich) (17) Ammoniaque (de la société Aldrich ; diluée à 21%). | | | | | | | | |

## Revendications

1. Elément de renfort en acier revêtu obtenu par revêtement d'au moins une partie de l'élément de renfort par une couche adhésive comprenant une composition adhésive aqueuse comportant :
- au moins un latex d'élastomère insaturé,
- au moins une résine phénol-aldéhyde à base d'au moins :
- un aldéhyde aromatique porteur d'au moins une fonction aldéhyde, comprenant au moins un noyau aromatique ;
- un polyphénol comportant un ou plusieurs noyau(x) aromatique(s), étant entendu que :
∘ dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
∘ dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées;
et la teneur en eau de la composition adhésive aqueuse étant comprise entre 60 et 90% en masse.

2. Elément de renfort en acier revêtu selon la revendication précédente, comprenant un ou plusieurs éléments de renfort filaires comprenant chacun une âme en acier.

3. Elément de renfort en acier revêtu selon la revendication 2, dans lequel la couche adhésive revêt directement une couche d'un revêtement métallique revêtant directement au moins une partie de l'âme en acier du ou de chaque élément de renfort filaire.

4. Elément de renfort en acier revêtu selon la revendication 2 ou 3, dans lequel la couche adhésive revêt directement une couche intermédiaire d'adhésion non métallique revêtant l'âme en acier du ou de chaque élément de renfort filaire.

5. Elément de renfort en acier revêtu selon l'une quelconque des revendications précédentes, dans lequel l'aldéhyde aromatique est porteur d'au moins deux fonctions aldéhydes.

6. Elément de renfort en acier revêtu selon l'une quelconque des revendications précédentes, dans lequel le noyau aromatique de l'aldéhyde aromatique est porteur de deux fonctions aldéhydes.

7. Elément de renfort en acier revêtu selon l'une quelconque des revendications précédentes, dans lequel le noyau aromatique de l'aldéhyde aromatique est un noyau benzénique.

8. Elément de renfort en acier revêtu selon la revendication précédente, dans lequel l'aldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

9. Elément de renfort en acier revêtu selon l'une quelconque des revendications 1 à 4, dans lequel l'aldéhyde est de formule générale (A): 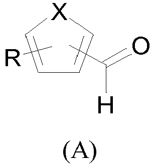 dans laquelle
X comprend N, S ou O
R représente -H ou -CHO

10. Elément de renfort en acier revêtu selon la revendication précédente, dans lequel l'aldéhyde est choisi dans le groupe constitué par le furfuraldéhyde, le 2,5-furanedicarboxaldéhyde et les mélanges de ces composés.

11. Elément de renfort en acier revêtu selon l'une quelconque des revendications précédentes, dans lequel le polyphénol est choisi dans le groupe constitué par le phloroglucinol, le 2,2',4,4'-tétrahydroxydiphényl sulfide et les mélanges de ces composés.

12. Procédé de fabrication d'un élément de renfort en acier revêtu au moins en partie d'une couche adhésive comportant une étape de revêtement d'au moins une partie de l'élément de renfort en acier par la couche adhésive comprenant une composition adhésive aqueuse comportant :
- au moins un latex d'élastomère insaturé, et
- au moins une résine phénol-aldéhyde à base d'au moins :
- un aldéhyde aromatique porteur d'au moins une fonction aldéhyde, comprenant au moins un noyau aromatique;
- un polyphénol comportant un ou plusieurs noyau(x) aromatique(s), étant entendu que :
∘ dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées ;
et la teneur en eau de la composition adhésive aqueuse étant comprise entre 60 et 90% en masse.

13. Utilisation, pour l'adhésion d'un élément de renfort en acier revêtu au moins en partie d'une couche adhésive à une matrice de caoutchouc, d'une composition adhésive aqueuse formant une couche adhésive, la composition adhésive aqueuse comportant :
- au moins un latex d'élastomère insaturé,
- au moins une résine phénol-aldéhyde, à base d'au moins :
- un aldéhyde aromatique porteur d'au moins une fonction aldéhyde, comprenant au moins un noyau aromatique ;
- un polyphénol comportant un ou plusieurs noyau(x) aromatique(s), étant entendu que :
∘ dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué ;
∘ dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées ;
et la teneur en eau de la composition adhésive aqueuse étant comprise entre 60 et 90% en masse.

14. Composite de caoutchouc renforcé d'au moins un élément de renfort en acier revêtu selon l'une quelconque des revendications 1 à 11 comprenant une matrice de caoutchouc dans laquelle est noyé l'élément de renfort en acier revêtu.

15. Pneumatique comprenant au moins un élément de renfort en acier revêtu selon l'une quelconque des revendications 1 à 11 ou un composite de caoutchouc selon la revendication 14.

## Patentansprüche

1. Stahlbewehrungselement mit einer Beschichtung, die durch Überziehen mindestens eines Teils des Bewehrungselements mit einer Klebstoffschicht erhalten wird, umfassend eine wässrige Klebstoffzusammensetzung, umfassend:
- mindestens ein Latex aus ungesättigtem Elastomer, und
- mindestens ein Phenol-Aldehyd-Harz auf Basis von mindestens:
- einem aromatischen Aldehyd, das Träger mindestens einer Aldehydfunktion ist, umfassend mindestens einen aromatischen Kern;
- einem Polyphenol, umfassend einen oder mehrere aromatische(n) Kern(e), wobei sich versteht, dass:
* im Fall eines einzigen aromatischen Kerns dieser letztgenannte Träger von zwei oder drei Hydroxylfunktionen in Meta-Position zueinander ist, wobei der Rest des aromatischen Kerns nicht substituiert ist;
* im Fall von mehreren aromatischen Kernen mindestens zwei von ihnen jeweils Träger von zwei oder drei Hydroxylfunktionen in Meta-Position zueinander sind, wobei es sich versteht, dass die zwei Ortho-Positionen mindestens einer dieser Hydroxylfunktionen nicht substituiert sind;
und wobei der Wassergehalt der wässrigen Klebstoffzusammensetzung zwischen 60 und 90 Masse-% beträgt.

2. Beschichtetes Stahlbewehrungselement nach dem vorhergehenden Anspruch, umfassend ein oder mehrere Drahtbewehrungselemente, jeweils umfassend einen Stahlkern.

3. Beschichtetes Stahlbewehrungselement nach Anspruch 2, bei dem die Klebstoffschicht direkt eine Schicht einer Metallverkleidung überzieht, die direkt mindestens einen Teil des Stahlkerns des oder jedes Drahtbewehrungselements überzieht.

4. Beschichtetes Stahlbewehrungselement nach Anspruch 2 oder 3, bei dem die Klebstoffschicht direkt eine nicht metallische Zwischenklebstoffschicht überzieht, die den Stahlkern des oder jedes Drahtbewehrungselements überzieht.

5. Beschichtetes Stahlbewehrungselement nach einem der vorhergehenden Ansprüche, bei dem das aromatische Aldehyd Träger mindestens zweier Aldehydfunktionen ist.

6. Beschichtetes Stahlbewehrungselement nach einem der vorhergehenden Ansprüche, bei dem der aromatische Kern des aromatischen Aldehyds Träger zweier Aldehydfunktionen ist.

7. Beschichtetes Stahlbewehrungselement nach einem der vorhergehenden Ansprüche, bei dem der aromatische Kern des aromatischen Aldehyds ein Benzolkern ist.

8. Beschichtetes Stahlbewehrungselement nach dem vorhergehenden Anspruch, bei dem das aromatische Aldehyd aus der Gruppe ausgewählt ist, bestehend aus 1,2-Benzol-dicarboxaldehyd, 1,3-Benzol-dicarboxaldehyd, 1,4-Benzol-dicarboxaldehyd, 2-Hydroxybenzol-1,3,5-tricarbaldehyd und den Mischungen dieser Verbindungen.

9. Beschichtetes Stahlbewehrungselement nach einem der Ansprüche 1 bis 4, bei dem das Aldehyd folgende allgemeine Formel (A) aufweist: 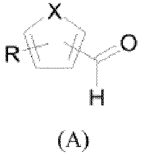 wobei
X N, S oder O umfasst
R -H oder -CHO darstellt.

10. Beschichtetes Stahlbewehrungselement nach dem vorhergehenden Anspruch, bei dem das Aldehyd aus der Gruppe ausgewählt ist, bestehend aus Furfuraldehyd, 2,5-Furandicarboxaldehyd und den Mischungen dieser Verbindungen.

11. Beschichtetes Stahlbewehrungselement nach einem der vorhergehenden Ansprüche, bei dem das Polyphenol aus der Gruppe ausgewählt ist, bestehend aus Phloroglucinol, 2,2',4,4'-Tetrahydroxydiphenylsulfid und den Mischungen dieser Verbindungen.

12. Verfahren zur Herstellung eines Stahlbewehrungselements, das zumindest teilweise mit einer Klebstoffschicht überzogen ist, umfassend einen Schritt des Überziehens mindestens eines Teils des Stahlbewehrungselements mit der Klebstoffschicht, umfassend eine wässrige Klebstoffzusammensetzung, umfassend:
- mindestens ein Latex aus ungesättigtem Elastomer, und
- mindestens ein Phenol-Aldehyd-Harz auf Basis von mindestens:
- einem aromatischen Aldehyd, das Träger mindestens einer Aldehydfunktion ist, umfassend mindestens einen aromatischen Kern;
- einem Polyphenol, umfassend einen oder mehrere aromatische(n) Kern(e), wobei sich versteht, dass:
* im Fall eines einzigen aromatischen Kerns dieser letztgenannte Träger von zwei oder drei Hydroxylfunktionen in Meta-Position zueinander ist, wobei der Rest des aromatischen Kerns nicht substituiert ist;
* im Fall von mehreren aromatischen Kernen mindestens zwei von ihnen jeweils Träger von zwei oder drei Hydroxylfunktionen in Meta-Position zueinander sind, wobei es sich versteht, dass die zwei Ortho-Positionen mindestens einer dieser Hydroxylfunktionen nicht substituiert sind;
und wobei der Wassergehalt der wässrigen Klebstoffzusammensetzung zwischen 60 und 90 Masse-% beträgt.

13. Verwendung, zum Kleben eines Stahlbewehrungselements, das zumindest teilweise mit einer Klebstoffschicht mit einer Kautschukmatrix überzogen ist, einer wässrigen Klebstoffzusammensetzung, die eine Klebstoffschicht bildet, wobei die wässrige Klebstoffzusammensetzung umfasst:
- mindestens ein Latex aus ungesättigtem Elastomer, und
- mindestens ein Phenol-Aldehyd-Harz auf Basis von mindestens:
- einem aromatischen Aldehyd, das Träger mindestens einer Aldehydfunktion ist, umfassend mindestens einen aromatischen Kern;
- einem Polyphenol, umfassend einen oder mehrere aromatische(n) Kern(e), wobei sich versteht, dass:
* im Fall eines einzigen aromatischen Kerns dieser letztgenannte Träger von zwei oder drei Hydroxylfunktionen in Meta-Position zueinander ist, wobei der Rest des aromatischen Kerns nicht substituiert ist;
* im Fall von mehreren aromatischen Kernen mindestens zwei von ihnen jeweils Träger von zwei oder drei Hydroxylfunktionen in Meta-Position zueinander sind, wobei es sich versteht, dass die zwei Ortho-Positionen mindestens einer dieser Hydroxylfunktionen nicht substituiert sind;
und wobei der Wassergehalt der wässrigen Klebstoffzusammensetzung zwischen 60 und 90 Masse-% beträgt.

14. Kautschukverbundstoff, der mit mindestens einem beschichteten Stahlbewehrungselement nach einem der Ansprüche 1 bis 11 verstärkt ist, umfassend eine Kautschukmatrix, in die das beschichtete Stahlbewehrungselement eingelassen ist.

15. Reifen, umfassend mindestens ein beschichtetes Stahlbewehrungselement nach einem der Ansprüche 1 bis 11 oder einen Kautschukverbundstoff nach Anspruch 14.

## Claims

1. Coated steel reinforcing element obtained by coating at least a portion of the reinforcing element with an adhesive layer comprising an aqueous adhesive composition comprising:
- at least one unsaturated elastomer latex,
- at least one phenol/aldehyde resin based on at least:
- one aromatic aldehyde bearing at least one aldehyde functional group, comprising at least one aromatic nucleus;
- one polyphenol comprising one or more aromatic nucleus/nuclei, it being understood that:
∘ in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted;
∘ and the water content of the aqueous adhesive composition being between 60 and 90% by weight.

2. Coated steel reinforcing element according to the preceding claim, comprising one or more threadlike reinforcing elements each comprising a steel core.

3. Coated steel reinforcing element according to Claim 2, in which the adhesive layer directly coats a layer of a metal coating directly coating at least a portion of the steel core of the or each threadlike reinforcing element.

4. Coated steel reinforcing element according to Claim 2 or 3, in which the adhesive layer directly coats a nonmetallic intermediate adhesive layer coating the steel core of the or each threadlike reinforcing element.

5. Coated steel reinforcing element according to any one of the preceding claims, in which the aromatic aldehyde bears at least two aldehyde functional groups.

6. Coated steel reinforcing element according to any one of the preceding claims, in which the aromatic nucleus of the aromatic aldehyde bears two aldehyde functional groups.

7. Coated steel reinforcing element according to any one of the preceding claims, in which the aromatic nucleus of the aromatic aldehyde is a benzene nucleus.

8. Coated steel reinforcing element according to the preceding claim, in which the aromatic aldehyde is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds.

9. Coated steel reinforcing element according to any one of Claims 1 to 4, in which the aldehyde is of general formula (A): 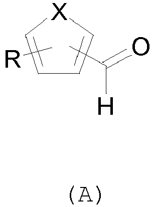 in which:
X comprises N, S or O,
R represents -H or -CHO.

10. Coated steel reinforcing element according to the preceding claim, in which the aldehyde is selected from the group consisting of furfuraldehyde, 2,5-furandicarboxaldehyde and the mixtures of these compounds.

11. Coated steel reinforcing element according to any one of the preceding claims, in which the polyphenol is selected from the group consisting of phloroglucinol, 2,2',4,4'-tetrahydroxydiphenyl sulphide and the mixtures of these compounds.

12. Process for the manufacture of a steel reinforcing element coated at least in part with an adhesive layer comprising a stage of coating at least a portion of the steel reinforcing element with the adhesive layer comprising an aqueous adhesive composition comprising:
- at least one unsaturated elastomer latex,
- at least one phenol/aldehyde resin based on at least:
- one aromatic aldehyde bearing at least one aldehyde functional group, comprising at least one aromatic nucleus;
- one polyphenol comprising one or more aromatic nucleus/nuclei, it being understood that:
∘ in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted;
∘ and the water content of the aqueous adhesive composition being between 60 and 90% by weight.

13. Use, for the adhesion of a steel reinforcing element coated at least in part with an adhesive layer to a rubber matrix, of an aqueous adhesive composition forming an adhesive layer, the aqueous adhesive composition comprising:
- at least one unsaturated elastomer latex,
- at least one phenol/aldehyde resin based on at least:
- one aromatic aldehyde bearing at least one aldehyde functional group, comprising at least one aromatic nucleus;
- one polyphenol comprising one or more aromatic nucleus/nuclei, it being understood that:
∘ in the case of just one aromatic nucleus, the latter bears two or three hydroxyl functional groups in the meta position with respect to each other or with respect to one another, the remainder of the aromatic nucleus being unsubstituted;
∘ in the case of several aromatic nuclei, at least two of them each bear two or three hydroxyl functional groups in the meta position with respect to each other or with respect to one another, it being understood that the two positions ortho to at least one of these hydroxyl functional groups are unsubstituted;
∘ and the water content of the aqueous adhesive composition being between 60 and 90% by weight.

14. Rubber composite reinforced with at least one coated steel reinforcing element according to any one of Claims 1 to 11, comprising a rubber matrix in which the coated steel reinforcing element is embedded.

15. Tyre comprising at least one coated steel reinforcing element according to any one of Claims 1 to 11 or a rubber composite according to Claim 14.
